# EUROPEAN PATENT APPLICATION

(11) **EP 1 289 203 A2**
(43) Date of publication of application: **05.03.2003**
(21) Application number: 02005661.0
(22) Date of filing: 12.03.2002
(51) Int. Cl.: H04L 12/56

(54) **Storage device**

(30) Priority: 04.09.2001 JP 2001267570
(71) Applicant: Kabushiki Kaisha Toshiba, Tokyo (JP)
(72) Inventor: Kobayashi, Koichi, 1-1-1 Shibaura, Minato-ku Tokyo 105-8001 (JP); Iba, Junichiro, 1-1-1 Shibaura, Minato-ku Tokyo 105-8001 (JP); Tanzawa, Kazunari, 1-1-1 Shibaura, Minato-ku Tokyo 105-8001 (JP)
(74) Representative: Wenning, Ekkehard

(57) **Abstract**

This invention relates to a storage device including a wireless unit (12) which performs wireless communication with another device, a storage unit (23, 24) for storing data, a processor (21) which transmits, based on a command from the device that has been received by communication through the wireless unit, data stored in the storage unit from the wireless unit to another device and stores data received by the wireless unit in the storage unit, and a battery (74) which supplies power to the wireless unit, storage unit, and processor.

## Description

The present invention relates to a storage device having a wireless communication function.

Memory cards are well known as media of an external storage device. As the memory card, PC card type memory modules, SD (Secure Digital) card type memory modules, and stick type memory modules have been available at present. These memory modules are detachable from information devices such as a notebook type personal computer with a dedicated slot having an interface function for each module.

For example, to exchange image data between personal computers having SD memory card slots like a digital camera having an SD memory card slot, an SD memory card is inserted into the digital camera. Sensed image data is recorded on the SD memory card, and the SD memory card is inserted into the personal computer to read the data. This enables exchanging data.

Other external storage devices are external HDD, DVD, and CD-R/W for data backup of an information device, a file server, auxiliary storage, and the like. Such an external storage device is connected to an information device with which data is exchanged, by using a cable interface such as a USB (Universal Serial Bus), SCSI (Small Computer System Interface), or IEEE 1394.

The external storage device is used as the HDD of a file server shared through a LAN or as the external storage device of a personal computer using a USB interface.

A memory card as one of external storage devices is thin, compact, and lightweight. However, the thin, compact, and lightweight memory card may be lost unawares. When the user wants to use a memory card after putting it into his/her pocket or bag, he/she may forget where he/she has put the memory card. The user must then search for the memory card.

The memory card does not assume the use of the memory card singly for data read/write. The memory card must be inserted/extracted into/from the dedicated slot of an information device with which data is exchanged. This requires cumbersome operation.

In exchanging data, only one memory card and one information device can exchange data. The memory card does not support data exchange with a plurality of information devices at the same time.

Since the memory card is thin, compact, and lightweight, the number of semiconductor memories integrated in the card is limited under physical restrictions. The data save capacity is limited; a large quantity of data cannot be saved. The memory card necessarily uses a dedicated slot, and cannot be used for a compact information device on which a dedicated slot cannot be physically mounted.

An external storage device such as an external HDD, DVD, or CD-R/W exhibits a large data storage capacity, but is bulky and is not easy to move. This external storage device always requires an AC power supply and is not suitable for mobile use. The bulky device is difficult to carry in a bag or a suit pocket.

The external storage device such as an HDD, DVD, or CD-R/W requires cable connection through LAN, USB, SCSI, or IEEE 1394 to an information device with which data is exchanged. Data can only be exchanged within the cable length range.

Owing to cable connection, data can only be exchanged between information devices one-on-one. Data cannot be simultaneously exchanged between a plurality of information devices.

Cable connection requires an interface such as LAN, USB, SCSI, or IEEE 1394. A compact, low-cost information device having no interface function cannot exchange data.

The present invention has been made in consideration of the above situation, and has as its object to provide a storage device capable of exchanging data between a plurality of devices without being inserted into a dedicated slot.

To achieve the above object, according to a first aspect of the invention, there is provided a storage device which has a function of communicating data wirelessly between a plurality of information processing apparatuses and stores data processed by the information processing apparatuses, comprising a wireless unit which performs wireless communication between the plurality of information processing apparatuses, a storage unit which stores data that is communicated wirelessly through the wireless unit and processed by the information processing apparatuses, a processor which transmits, based on a command from an information processing apparatus that has been received through the wireless unit, data stored in the storage unit from the wireless unit to another information processing apparatus and stores data received by the wireless unit in the storage unit, and a battery which supplies power to the wireless unit, the storage unit, and the processor.

The present invention achieves communication through the wireless unit. Data can be exchanged wirelessly within a wireless communicable distance, resulting in a higher degree of freedom and better convenience than in conventional cable connection.

The storage device comprises a battery, can be used at a place where no AC power supply is installed, and is suitable for mobile use.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view for explaining the use environment of a portable external storage device according to the first embodiment of the present invention;
FIG. 2 is a block diagram showing the arrangement of the portable external storage device according to the first embodiment of the present invention;
FIG. 3 is a block diagram showing the arrangement of a portable external storage device according to the second embodiment of the present invention;
FIG. 4 is a block diagram showing the arrangement of a portable external storage device according to the third embodiment of the present invention;
FIG. 5 is a block diagram showing the arrangement of a portable external storage device according to the fourth embodiment of the present invention;
FIG. 6 is a block diagram showing the arrangement of a portable external storage device according to the fifth embodiment of the present invention;
FIG. 7 is a flow chart for explaining the operation of the portable external storage device according to the embodiment of the present invention;
FIG. 8 is a flow chart for explaining the operation of the portable external storage device according to the embodiment of the present invention;
FIG. 9 is a flow chart for explaining the operation of an information device which is to communicate with the portable external storage device according to the embodiment of the present invention; and
FIG. 10 is a flow chart for explaining the operation of the information device which is to communicate with the portable external storage device according to the embodiment of the present invention.

A portable external storage device according to embodiments of the present invention will be described below with reference to the several views of the accompanying drawing.

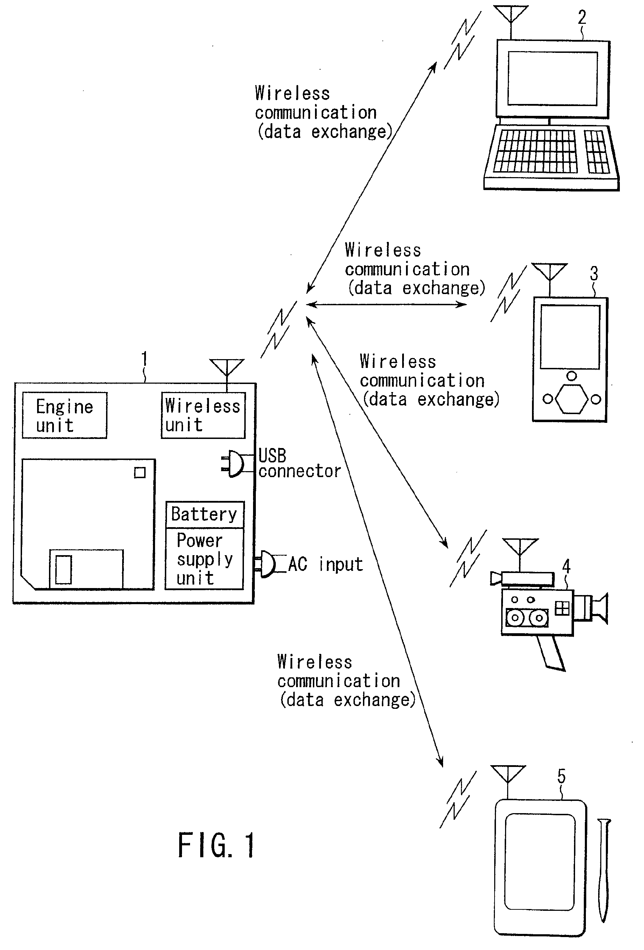

FIG. 1 is a view for explaining the use environment of a portable external storage device according to the first embodiment of the present invention.

As shown in FIG. 1, communication partners of a portable external storage device 1 according to the first embodiment are information devices such as a personal computer 2, portable game machine 3, digital video camera 4, and PDA (Personal Digital Assistant) 5. The portable external storage device 1 of the first embodiment and the information devices 2 to 5 as its communication partners have Bluetooth modules, and perform data communication via the Bluetooth modules.

For example, to exchange image data between the digital video camera 4 and the personal computer 2, image data is exchanged between the digital video camera 4 and the portable external storage device 1 by wireless communication using the Bluetooth modules, and saved in a storage medium in the portable storage device. At this time, the digital video camera 4 and portable external storage device 1 can be connected wirelessly as far as they fall within a wireless communicable distance of about 100 m at maximum by the Bluetooth module.

Then, the portable external storage device is moved close to the personal computer 2 to which the image data is to be transmitted by a predetermined distance (Bluetooth wireless communicable distance of about 100 m at maximum). A Bluetooth link is automatically established to transfer the image data from the portable storage device to the personal computer.

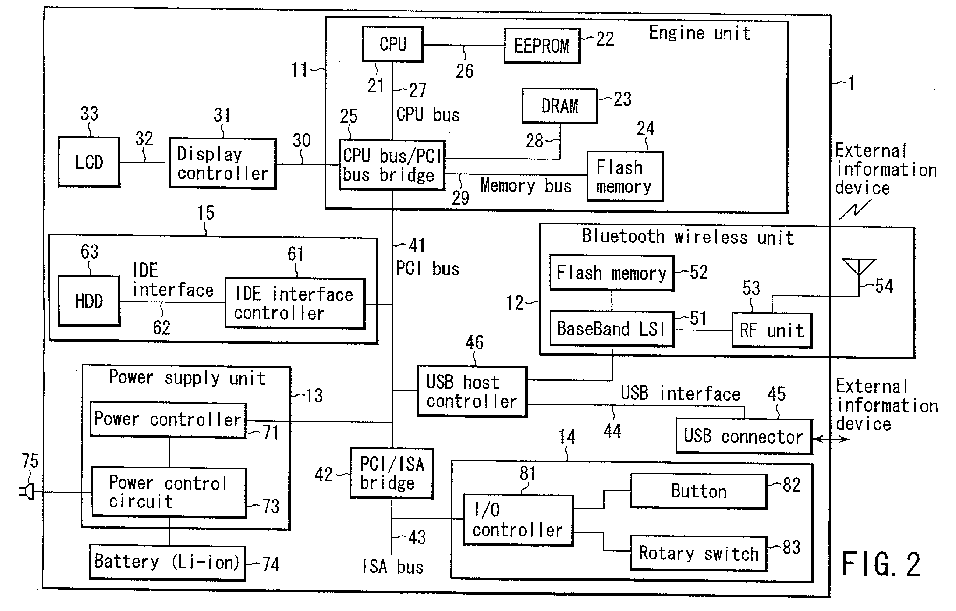

The portable external storage device according to the first embodiment of the present invention will be explained herein. FIG. 2 is a block diagram showing the arrangement of the portable external storage device according to the first embodiment of the present invention.

As shown in FIG. 2, the portable external storage device 1 of the first embodiment comprises an engine unit 11, Bluetooth wireless unit 12, power supply unit 13, setup unit 14, and storage unit 15.

The engine unit 11 controls the overall portable external storage device. A CPU 21 which controls the whole storage device is connected to an EEPROM 22 via a bus 26. The EEPROM 22 records various pieces of setup information of the portable external storage device.

The CPU 21 is connected to a CPU bus/PCI bus bridge 25 via a CPU bus 27. The CPU bus/PCI bus bridge 25 is connected to a DRAM 23 via a memory bus 28 and to a flash memory 24 via a memory bus 29.

The DRAM 23 is a work memory for the CPU 21. The flash memory 24 stores a program executed by the CPU 21.

The CPU bus/PCI bus bridge 25 is connected to a display controller 31 via a bus 30. The display controller 31 is connected to an LCD 33 via a bus 32. The display controller 31 controls the display of the LCD 33. The CPU bus/PCI bus bridge 25 functions as an interface bridge between the CPU bus 27 and a PCI bus 41.

The PCI bus 41 is connected to an ISA bus 43 via a PCI/ISA (Peripheral Component Interconnect/Industry Standard Architecture) bridge 42. The PCI bus 41 is connected to the Bluetooth wireless unit 12 and a USB interface 44 via a USB host controller 46. The USB interface 44 is connected to a USB connector 45 for connecting a peripheral device.

The Bluetooth wireless unit 12 is connected to the USB host controller 46. The Bluetooth wireless unit 12 comprises a baseband LSI 51 for controlling a Bluetooth wireless function, a flash memory 52 for storing a program executed by the baseband LSI 51, an antenna 54, and an RF unit 53 for controlling an RF signal between the baseband LSI 51 and the antenna 54.

The PCI bus 41 is connected to the storage unit 15. The storage unit 15 has an IDE interface controller 61 connected via the PCI bus 41, and an HDD 63 connected to the IDE interface controller 61 via an IDE interface 62.

The PCI bus 41 is connected to the power supply unit 13. The power supply unit 13 comprises a power controller 71 connected to the PCI bus 41, and a power control circuit 73 connected to the power controller 71. The power control circuit 73 is connected to a battery 74 and AC input 75. Power is supplied from the battery 74 when the portable external storage device is used in a mobile environment, or from the AC input 75 when the device is used in a battery chargeable/AC drivable environment.

Power from the battery 74 and AC input 75 is supplied to elements, e.g., the engine unit 11, wireless unit 12, and storage unit 15 that are necessary to operate the portable external storage device.

The ISA bus 43 is connected to the setup unit 14. The setup unit 14 includes an I/O controller 81 connected to the ISA bus 43, a button 82 connected to the I/O controller 81, and a rotary switch 83. The button 82 and rotary switch 83 are used for security setups and device activation such as input of a Bluetooth PIN code.

In the above description, the portable external storage device uses the HDD 63 as a storage medium. However, the storage medium is not limited to this.

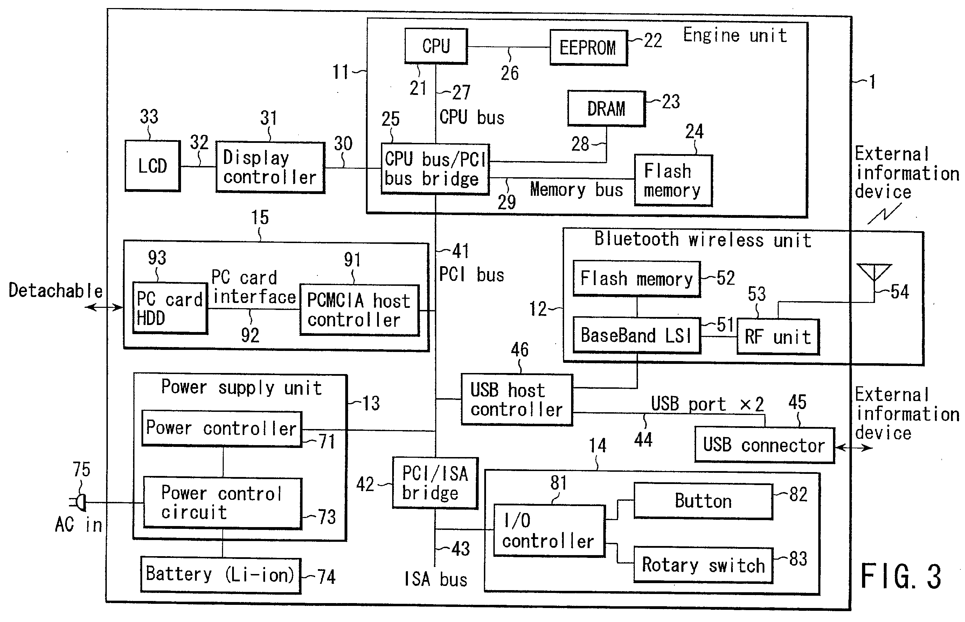

FIG. 3 is a block diagram showing the arrangement of a portable external storage device according to the second embodiment of the present invention. The same reference numerals as in FIG. 2 denote the same parts, and a description thereof will be omitted.

As shown in FIG. 3, the portable external storage device of the second embodiment is different from the external storage device of the first embodiment in that a storage unit 15 uses a PC card HDD 93, and a PCMCIA host controller 91 connected to the PC card HDD 93 via a PC card interface 92. The PC card HDD 93 is detachable because it is connected via the PC card interface 92.

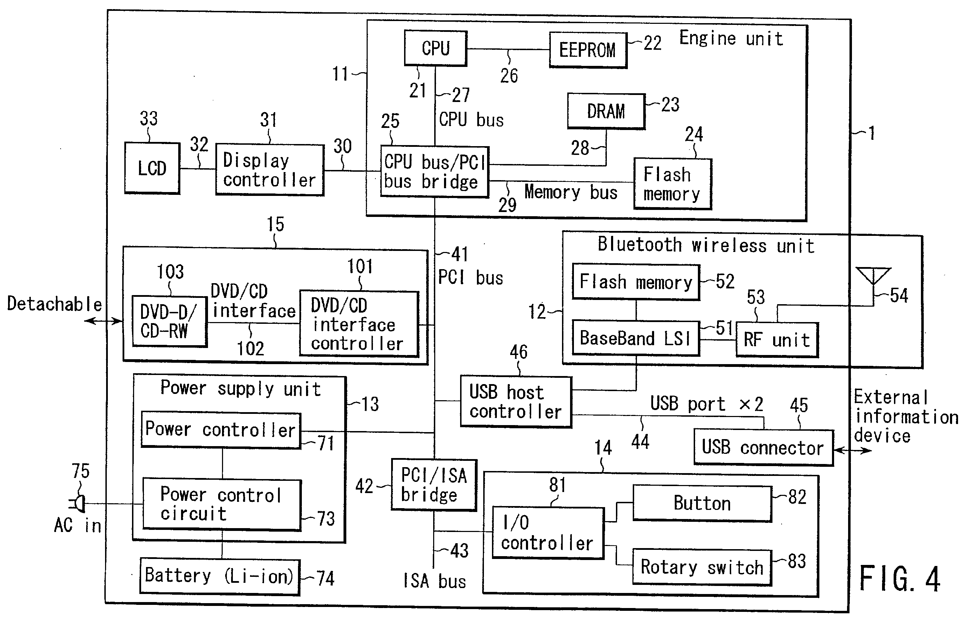

FIG. 4 is a block diagram showing the arrangement of a portable external storage device according to the third embodiment of the present invention. The same reference numerals as in FIG. 2 denote the same parts, and a description thereof will be omitted.

As shown in FIG. 4, the portable external storage device of the third embodiment is different from the external storage device of the first embodiment in that a storage unit 15 uses a DVD drive/CD-RW drive 103, and a DVD/CD interface controller 101 connected to the DVD drive/CD-RW drive 103 via a DVD/CD interface 102. The DVD drive/CD-RW drive 103 is detachable from the DVD/CD interface 102.

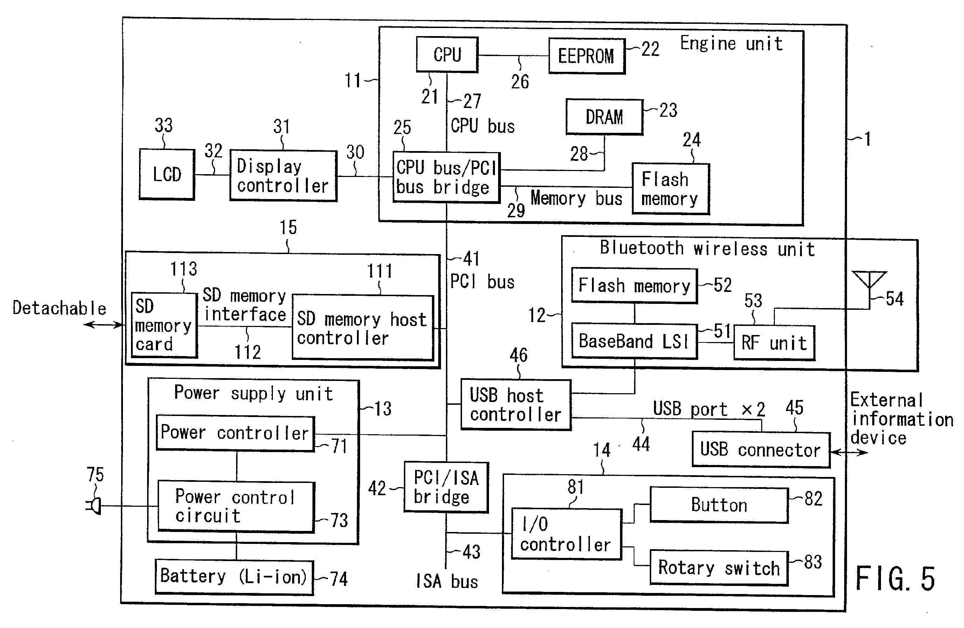

FIG. 5 is a block diagram showing the arrangement of a portable external storage device according to the fourth embodiment of the present invention. The same reference numerals as in FIG. 2 denote the same parts, and a description thereof will be omitted.

As shown in FIG. 5, the portable external storage device of the fourth embodiment is different from the external storage device of the first embodiment in that a storage unit 15 uses an SD memory card 113, and an SD memory host controller 111 connected to the SD memory card 113 via an SD memory interface 112. The SD memory card 113 is detachable from the SD memory interface 112.

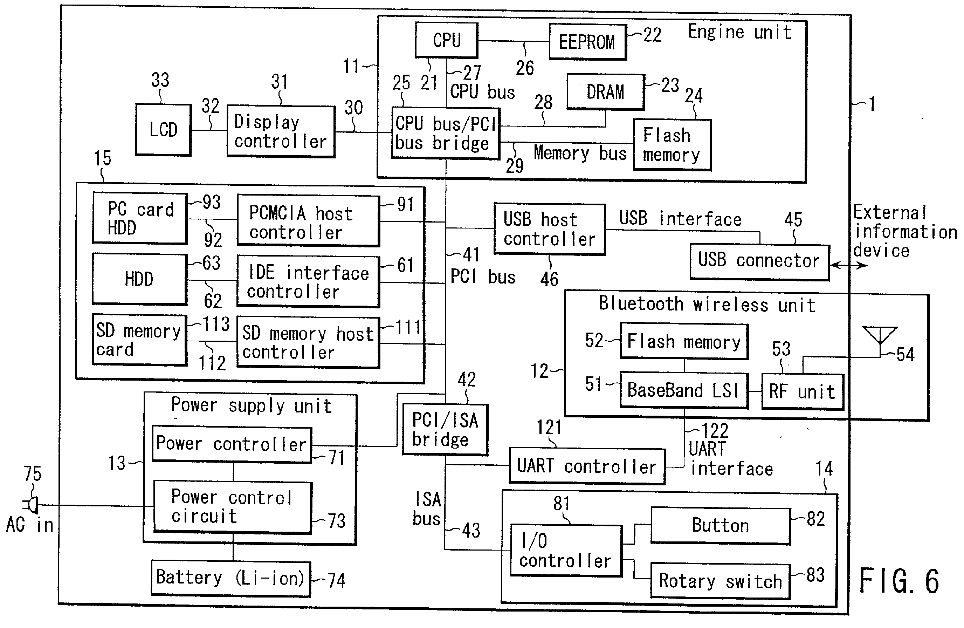

FIG. 6 is a block diagram showing the arrangement of a portable external storage device according to the fifth embodiment of the present invention. The same reference numerals as in FIGS. 2 to 5 denote the same parts, and a description thereof will be omitted.

As shown in FIG. 6, the portable external storage device of the fifth embodiment is different from the external storage device of the first embodiment in that a PC card HDD 93 and SD memory card 113 are arranged as storage devices in addition to an HDD 63, and corresponding controllers 91 and 111 are also arranged.

In the fifth embodiment, a Bluetooth wireless unit 12 is connected not to a PCI bus 41 but to an ISA bus 43 via a UART (Universal Asynchronous Receiver Transmitter) controller 121 and UART interface 122.

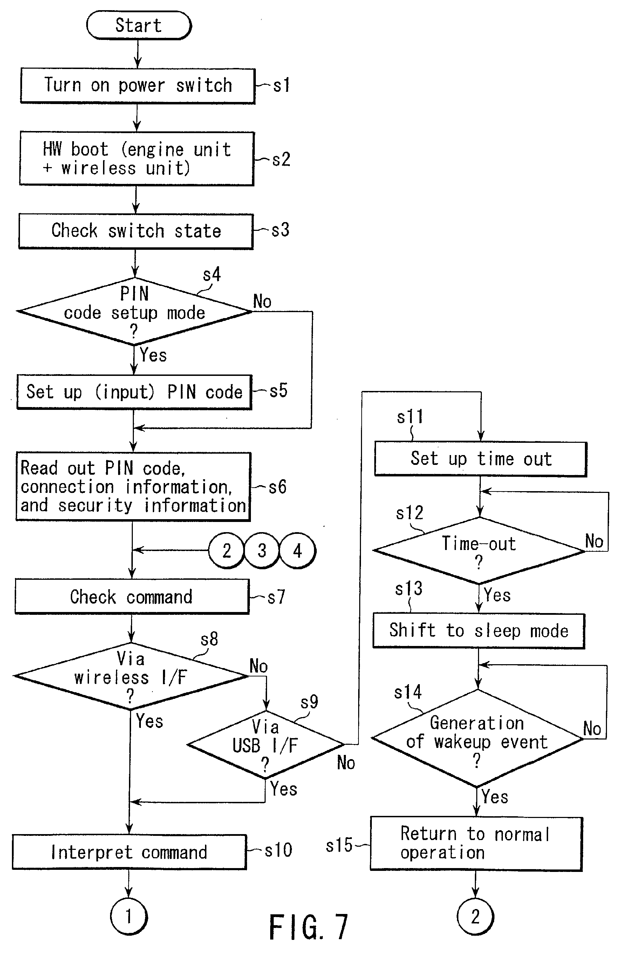

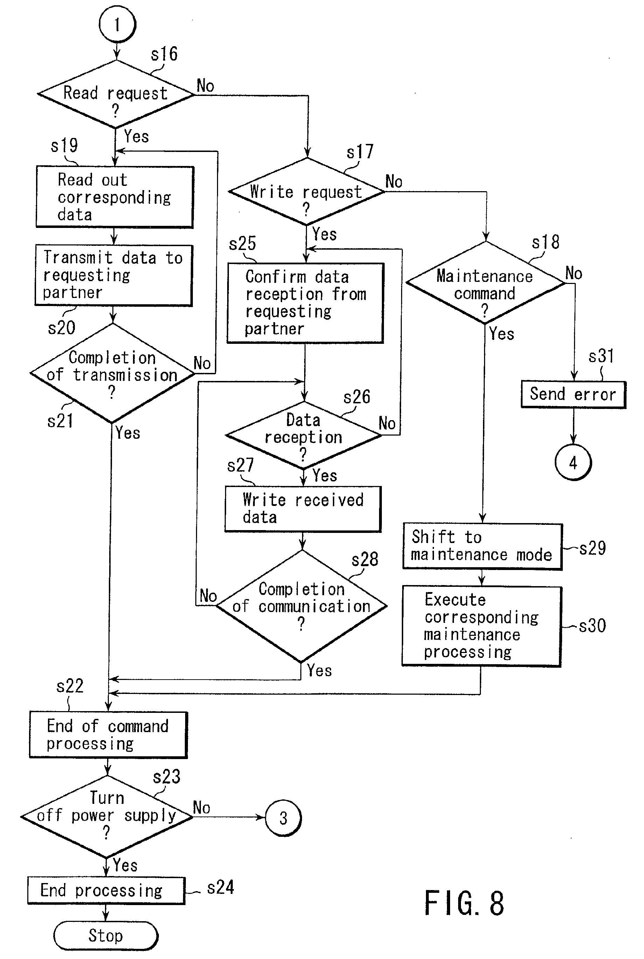

The operation of a portable external storage device according to an embodiment of the present invention will be explained with reference to the flow charts of FIGS. 7 and 8. The portable storage device according to the first embodiment will be described, but the operation is basically the same in the remaining embodiments.

If the user turns on the power switch of the portable external storage device 1 (S1), the engine unit 11 and Bluetooth wireless unit 12 are activated as a hardware boot (S2). At this time, the CPU 21 loads a program from the flash memory 24. The baseband LSI 51 also loads a program from the flash memory 52. These programs are executed to start the following operation.

After the hardware boot is performed and the programs run, the switch state is checked (S3). The check of the switch state is done by reading the setup states of the button 82 and rotary switch 83.

Whether a Bluetooth PIN code setup mode set by the user in advance exists is checked (S4). For the PIN code setup mode, the read states of the rotary switch 83 and button 82 are stored in the DRAM 23 as PIN code information (S5).

A PIN code, connection information concerning a device connected in the past, and security information are read out from the DRAM 23, and Bluetooth communication is enabled (S6). A command from an information device as a data exchange partner is checked (S7). Whether the command is the one received via the Bluetooth wireless unit 12 is determined (S8).

If Y in S8, the command is interpreted (S10), and whether the command is a read request is determined (S16).

If Y in S16, data requested by the read request command is read out from the HDD 63, and the readout data is transmitted to the requesting information device (S20). At this time, the data is transmitted using the interface which has received the command (Bluetooth wireless unit 12 or USB I/F (USB connector 45 and USB host controller 46)).

Whether transmission of the data is complete is determined (S21). If Y in S21, command processing ends (S22). If N in S21, the flow returns to processing in S19.

After command processing ends, the state of the button 82 is checked to determine whether power-off of the device has been selected (S23). If Y in S23, end processing of the device is performed (S24); if N, the flow returns to processing in S7.

If N in S16, whether the command is a write request is determined (S17). If Y in S17, data reception from a requesting partner information device is confirmed (S25). Data are sequentially received (S26), and written in a medium (in this case, the HDD 63) in the device (S27).

Whether reception of the data is complete is determined (S28). If N in S28, the flow returns to processing in S26; if Y, the flow advances to processing in S22. The operation in S22 and subsequent steps has already been described.

If N in S17, whether the command is a maintenance command is determined (S18). If Y in S18, the flow shifts to a maintenance mode (S29) to execute maintenance processing (S30). Note that the contents of maintenance processing are based on a command from the partner information device. After that, the flow advances to processing in S22. If N in S18, an error is transmitted to the requesting partner information device (S31), and the flow returns to processing in S7.

If N in S8, whether the command is the one received via the USB I/F is determined (S9).

If Y in S9, the flow shifts to processing in S10; if N, the time-out period is set (S11), and whether a time-out occurs is checked (S12).

If Y in S12, the flow shifts to a sleep mode (S13). After shift to the sleep mode, whether a wakeup event occurs via user's button operation, a wireless I/F, or a USB I/F is determined (S14). If Y in S14, the portable external storage device returns to normal operation (S15), and shifts to processing in S7.

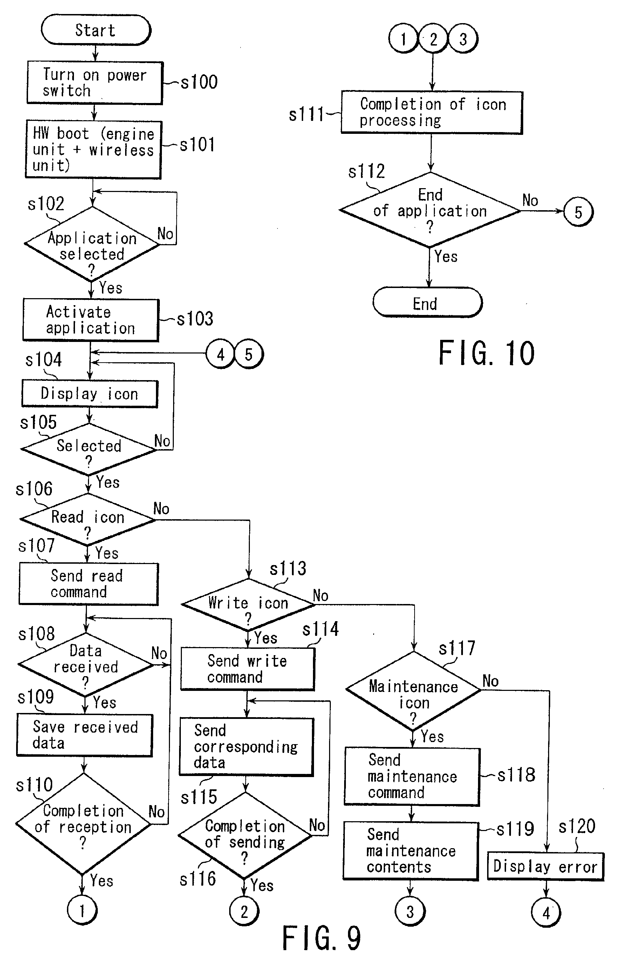

The operation of an information device which is to communicate with the portable external storage device according to the embodiment of the present invention will be described with reference to the flow charts of FIGS. 9 and 10.

The user turns on the power switch (S100), and the engine unit and Bluetooth wireless unit are activated as a hardware boot (S101). In this case, the engine unit and Bluetooth wireless unit are mounted on the partner information device, as described in the arrangement of the portable external storage device.

Whether an application program for communication with the portable external storage device has been selected is checked (S102). If Y in S102, the application program is activated (S103) to display a read icon, write icon, and maintenance icon (S104).

The read icon is used to read out data from the portable external storage device. The write icon is used to write data in the portable external storage device. The maintenance icon is used to execute maintenance of the portable external storage device.

Whether an icon has been selected is checked (S105). If Y in S105, whether the selected icon is the read icon is checked (S106).

If Y in S106, a read command is sent to the portable external storage device (S107). Then, whether data has been received from the portable external storage device is determined (S108).

If Y in S108, the received data is saved (S109), and whether reception is complete is determined (S110). If N in S110, the flow returns to processing in S108.

If Y in S110, icon processing ends (S111), and the end of the application software is confirmed (S112). If the end of the application software is not selected in S112, the flow returns to processing in S104. If the end of the application software is selected, a series of processes end.

If N in S106, whether the icon is the write icon is checked (S113). If Y in S113, a write command is sent to the portable external storage device (S114), and data corresponding to the write command is sent (S115).

Whether sending of the data is complete is determined (S116). If N in S116, the flow returns to processing in S115; if Y, the flow advances to processing in S111.

If N in S113, whether the icon is the maintenance icon is checked (S117). If Y in S117, a maintenance command is sent (S118), maintenance contents are sent (S119), and then the flow shifts to processing in S111. If N in S117, an error display is done (S120), and the flow advances to processing in S104.

The portable external storage device of the embodiment enables exchanging data between information devices by using a Bluetooth (short-distance wireless communication standard) wireless communication function. The portable external storage device can be used while being in a pocket or bag as far as it falls within a wireless communicable distance (100 m at maximum). The portable external storage device is much more convenient than a conventional memory card.

The use of wireless communication allows using the portable external storage device while being in a predetermined place such as a bag. This prevents loss of the portable external storage device.

The use of the Bluetooth wireless communication function facilitates construction of a wireless network such as piconet or scatternet. Data can be simultaneously exchanged between a plurality of devices, compared to a conventional memory card.

The portable external storage device of the embodiment is physically larger than a conventional memory card, so that a larger number of semiconductor memories can be mounted to increase the capacity. The portable external storage device assumes an HDD, DVD, and CD-R/W as recording media, is larger in storage capacity than a conventional memory card, and can easily save a large quantity of data.

The portable external storage device adopts Bluetooth which can be realized by a very small wireless apparatus. Even a compact information device such as a conventional memory card which cannot be physically equipped with a dedicated slot can employ this portable external storage device.

The external storage device of the embodiment will be compared with a conventional external storage device using a cable interface such as LAN, USB, SCSI, or IEEE 1343.

The external storage device of the embodiment has a physical size enough to put the device in a suit pocket, and can be driven by a battery. The external storage device can be easily carried, used at a place where no AC power supply is installed, and is suitable for mobile use, in comparison with a bulky external storage device (data backup of an information device and a file server) used in a conventional LAN, or an external HDD, DVD, or CD-R/W for auxiliary storage.

The use of the Bluetooth wireless communication function enables wireless data exchange within a wireless communicable distance (100 m at maximum). This offers a higher degree of freedom and better convenience than in conventional cable connection.

The use of the Bluetooth wireless communication function facilitates construction of a wireless network such as piconet or scatternet. Data can be simultaneously exchanged between a plurality of devices, compared to conventional cable connection.

The portable external storage device of the embodiment uses Bluetooth which can be implemented by a very small, low-cost wireless apparatus. The portable external storage device need not have any dedicated interface, unlike conventional cable connection. Even an information device which is difficult to use a cable interface physically or in terms of cost can employ the portable external storage device.
The portable external storage device can be mounted on any information device.

The present invention is not limited to the above-described embodiments, and can be variously modified without departing from the spirit and scope of the invention in practical use. The respective embodiments can be combined as properly as possible. In this case, the effects of the combination can be obtained. The embodiments include inventions on various stages, and various inventions can be extracted by an appropriate combination of building components disclosed. For example, when an invention is extracted by omitting several building components from all those described in the embodiments, the omission is properly compensated for by a well-known technique in practicing the extracted invention.

As has been described in detail, the present invention can provide an external storage device capable of exchanging data between a plurality of devices without being inserted into a dedicated slot.

## Claims

1. A storage device which has a function of communicating data wirelessly with an information processing apparatus and stores data processed by the information processing apparatus, **characterized by** comprising:
a wireless unit (12) which performs wireless communication between the information processing apparatus;
a storage unit (23, 24) which stores data that is communicated wirelessly through said wireless unit and processed by the information processing apparatus;
a processor (21) which transmits, based on a command from the information processing apparatus that is received through said wireless unit, data stored in said storage unit from said wireless unit to another information processing apparatus and stores data received by said wireless unit in said storage unit; and
a battery (74) which supplies power to said wireless unit, said storage unit, and said processor.

2. A device according to claim 1, **characterized in that** said storage unit includes a hard disk drive.

3. A device according to claim 1, **characterized in that** said storage unit includes an SD (Secure Digital) card.

4. A device according to claim 1, **characterized in that** said storage unit includes an optical disk drive.

5. A device according to claim 2, **characterized in that** said hard disk drive includes a PC card type hard disk drive, and is detachable from a PC card interface of said portable external storage device.

6. A device according to claim 1, **characterized in that** said wireless unit complies with a Bluetooth standard.

7. A device according to claim 6, **characterized by** further comprising means for inputting a PIN (Personal Identification Number) code necessary for connection authentication complying with the Bluetooth standard.

8. A data processing method in a storage device having a wireless unit which communicates data wirelessly with an information processing apparatus, and a storage unit which stores data processed by the information processing apparatuses, **characterized by** comprising:
interpreting a command from the information processing apparatus that is received by the wireless unit; and
when the command is a write request, receiving data from the information processing apparatus to write the received data in the storage unit, and when the command is a read request, reading data designated by the read request from the storage unit to transmit the read data to the information processing apparatus via the wireless unit.

9. A method according to claim 8, **characterized by** further comprising a step of, when the command is a maintenance command, shifting to a maintenance mode to perform maintenance processing designated by the maintenance command.

10. A method according to claim 8, **characterized by** further comprising steps of:
before the step of interpreting the command, determining whether the command is received via a predetermined interface; and
shifting to a sleep mode when the command is determined not to have been received via the predetermined interface.

11. A method according to claim 8, **characterized in that** the storage unit includes a hard disk drive.

12. A method according to claim 8, **characterized in that** the storage unit includes an SD (Secure Digital) card.

13. A method according to claim 8, **characterized in that** the storage unit includes an optical disk drive.

14. A method according to claim 8, **characterized in that** the hard disk drive includes a PC card type hard disk drive, and is detachable from a PC card interface of the portable external storage device.

15. A method according to claim 8, **characterized in that** the wireless unit complies with a Bluetooth standard.
